# EUROPEAN PATENT SPECIFICATION

(11) **EP 0 443 373 B1**
(45) Date of publication and mention of the grant of the patent: **03.05.1995**
(21) Application number: 91101685.5
(22) Date of filing: 07.02.1991
(51) Int. Cl.: G03B 42/04

(54) **X-ray film cassette**
Röntgenfilmkassette
Cassette de film à rayons-X

(30) Priority: 20.02.1990 DE 4005217
(43) Date of publication of application: 28.08.1991
(73) Proprietor: EASTMAN KODAK COMPANY, Rochester, New York 14650-2201 (US); KODAK AKTIENGESELLSCHAFT, D-70323 Stuttgart (DE)
(72) Inventor: Lentz, Günther, W-7012 Fellbach (DE); Mutze, Ulrich, Dr., W-7000 Stuttgart 20 (DE); Ort, Wolfgang, W-7000 Stuttgart 50 (DE); Renner, Meinrad, W-7300 Esslingen (DE); Quanz, Gerhard, W-7000 Stuttgart 61 (DE); Hagmeier, Bernhard, W-7341 Geislingen-Aufhausen (DE)
(74) Representative: Lewandowsky, Klaus, Dipl.-Ing.

(56) References cited:
- DE-A- 3 633 289
- FR-A- 2 077 128
- GB-A- 2 069 155

## Description

The invention relates to an X-ray film cassette with a means for marking a loaded X-ray film by exposing said film to data of a data carrier using a light source which is provided within the cassette, which can be electrically activated from the outside of the cassette via connections leading to the exterior and which is spaced from the X-ray film at a distance which allows the data carrier to be accommodated such that the light falling from said light source onto the X-ray film can be modulated by the data of the data carrier which are to be exposed onto said film.

An X-ray film cassette of this type has already been disclosed in DE-A-2 104 252. This known cassette features at its edge a light-tight slot into which the data carrier, a sheet of light-impermeable material, is introduced from the outside. When inserted the data carrier is positioned in the raypath between light source and X-ray film so that the data of the data carrier can be applied to the X-ray film by exposure with the light source.

Due to the presence of a slot the strength of the housing structure of the known X-ray film cassette is reduced in a disadvantageous manner. Moreover, special constructional provisions have to be made in order to prevent light from entering the slot opening. An even more serious disadvantage of the known X-ray film cassette is that it is cumbersome and difficult to handle. As a rule, a separate data carrier has to be prepared for each marking operation, on which the data to be exposed have to be written. Subsequently the data carrier has to be combined with the X-ray film cassette to which it belongs and to be inserted into the slot provided in said cassette. Apart from the numerous handling operations involved, there is also the danger of the film being incorrectly marked because data carriers and X-ray film cassettes are incorrectly associated.

It is the object of the invention to provide an X-ray film cassette of the generic type in which the X-ray film can be marked in a particularly uncomplicated and reliable manner.

According to the invention this object is attained in an X-ray film cassette of the above mentioned type in that
a) an LCD unit serves as a data carrier,
b) the LCD unit is stationarily mounted in the space forming the raypath between X-ray film and light source and, for reading in of the data, can be controlled from the outside of the cassette by control contacts leading to the exterior, and
c) in addition to the LCD unit, a light-directing arrangement with at least one louver screen is arranged in the raypath between light source and X-ray film.

Since, according to features a) and b), the data carrier is an LCD unit stationarily mounted in the cassette, the operations of associating a previously prepared data carrier with a cassette and its insertion into the cassette are no longer required when the X-ray film cassette according to the invention is used. Not only is handling facilitated in this way but the cassette also offers the great advantage that erroneous identifications are avoided which may occur if data carriers and cassettes are incorrectly associated.

The use of an LCD unit as a data carrier also eliminates a further source of error which may lead to incorrect identification in the case of the known cassette. According to the invention the data are read in automatically, via control contacts of the LCD unit, which if an LCD unit of the nematic TN type is used occurs simultaneously with the application of a voltage which activates the light source to effect exposure. The arrangement may be such that the set of data concerned is automatically retrieved, in response to a control signal, from a data file in which patient data are stored, e.g. the computer system of a hospital. If the hospital or doctor's office is organized such that each patient has a patient ID card, the patient data can also be fed into a suitable control unit by means of a card reader, which, e.g., senses a magnetic strip on the ID card or reads a machine-readable code on said card, the control unit cooperating with the control contacts of the LCD unit and the connections of the light source of the cassette. The data may also be entered directly into the control unit, for example, via a keyboard. Since the marking of the X-ray film is fully automatic, the data being automatically retrieved from a data file in response to the start of the exposure operation, the danger of an X-ray film being incorrectly identified is minimized.

Due to the fact that, according to feature c), a light-directing arrangement including a louver screen is provided in the raypath between the light source and the X-ray film, the marks are recorded on the X-ray film sharply and with high contrast, which prevents the film from being incorrectly identified.

The invention results in a robust cassette structure because the walls of the cassette housing are not interrupted by either a slot opening through which a data carrier is inserted or by a closable exposure window as found in certain types of X-ray film cassettes in which the film is identified by means of exterior projection means which expose said film through the open exposure window.

The light source preferably is an electroluminescent plate which is arranged such that it illuminates the data-carrying field of the LCD unit. If an LCD unit of the nematic type (TN-cell) is used, a polarizing element is disposed in the raypath of the light incident on the LCD unit. The light emanating from the LCD unit on its opposite side passes through an analyzer of the type commonly used in the case of nematic LCD units, before it falls on the X-ray film.

The light-directing arrangement may be located between the light source and the LCD unit and/or between the LCD unit and the X-ray film and serves to suppress stray light. The marking exposed on the film is the sharper and has the more contrast the higher the proportion of the light impinging perpendicularly on the film plane and the lower that of the light falling obliquely on said plane.

A particularly favorable stray light suppression can be reached if a plurality of louver screens are arranged one behind the other in the raypath. The orientation of the louver screens is preferably selected such that the louver elements cross each other, i.e. elements of adjacent screens are disposed at an angle of 90° or 45° to each other.

Favorable light-directing conditions are also obtained if at least one louver screen is used whose elements extend in different directions, i.e. cross each other, for example, at an angle of 90°.

Louver screens may also be used in which the elements are inclined in such a way that the main plane defines an angle with the axis of the raypath.

The invention will now be described in more detail with reference to the drawing in which:
- Fig. 1: shows a perspective and highly schematic view of an embodiment of the X-ray film cassette and an associated means for reading patient data into the data carrier of the cassette,
- Fig. 2: shows a highly schematic sectional view, taken along line II-II in Fig. 1 and shown with parts broken away and on a larger scale than Fig. 1,
- Figs. 3 and 4: show schematic views, seen in a direction parallel to the cassette plane, of the data exposure unit of two embodiments of the X-ray film cassette,
- Figs. 5 to 8: show schematic views of an arrangement of louver screens as used in the exposure units according to Figs. 3 and 4, and
- Fig. 9: shows a perspective view of another usable louver screen with louver elements crossing each other at right angles.

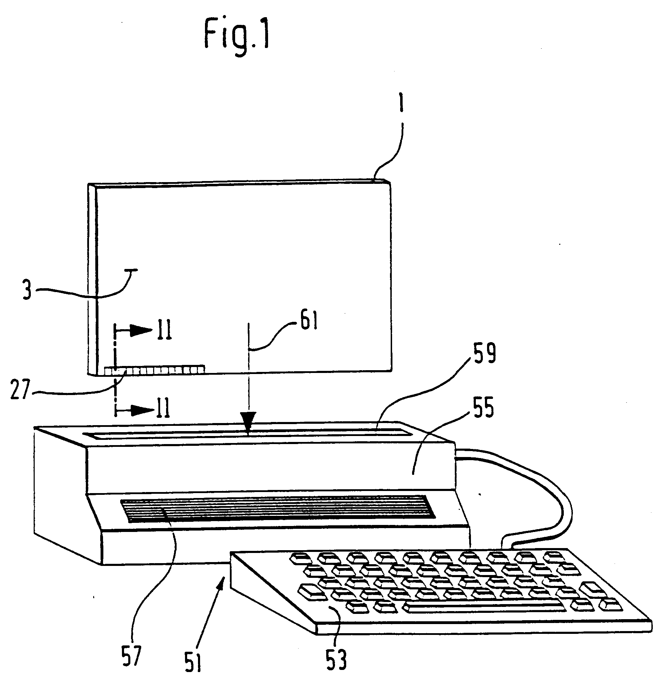

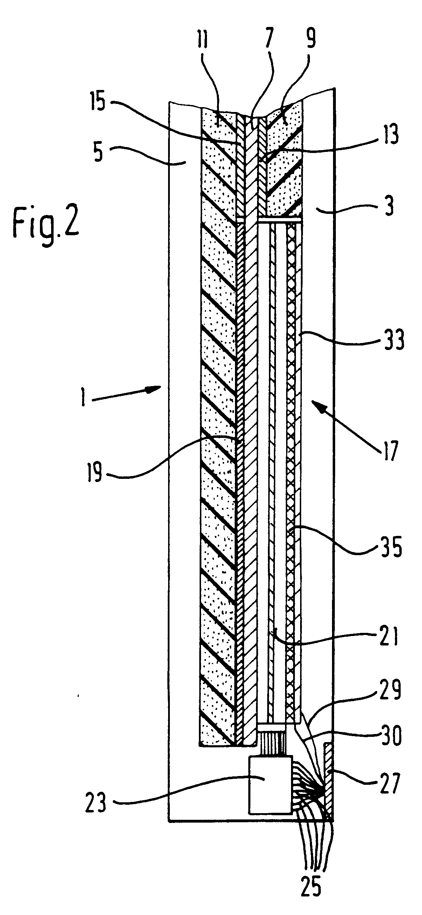

An X-ray film cassette 1 which is shown in Fig. 1 with its housing cover 3 facing the observer, and of which only a partial area is illustrated in Fig. 2 has - apart from the special type and arrangement of a built-in exposure means - a structure as commonly found in such cassettes so that details of the cassette housing have not been represented. Fig. 2 only shows the outer contour of the housing without details of the junction area between housing cover 3 and bottom portion 5 of cassette 1 where engaging portions of the housing cover 3 and the bottom portion 5 define a labyrinth-type light seal.

Also in the usual manner, an X-ray film 7 is located between a foam-rubber pad 9 adjacent to cover 3 and a foam-rubber pad 11 adjacent to bottom portion 5, with an intensifying screen 13 and 15 respectively resting against the X-ray film 7 between said film and the foam-rubber pads 9 and 11.

Each of the intensifying screens 13 and 15 has a cut-out in the area of a corner of cassette 1. This cut-out area where the X-ray film 7 is not covered by the intensifying screens 13, 15 serves as a marking area in which data can be applied to the X-ray film 7 by means of an exposure unit fixedly built into cassette 1 and generally denoted 17 in Fig. 2.

Exposure unit 17 comprises a lead plate 19 which rests against X-ray film 7 in the cut-out area instead of intensifying screen 15, i.e. it is located between the X-ray film and the foam-rubber pad 11 of the bottom portion. Since cassette 1 is exposed to the X-rays from the direction of bottom portion 5, the cut-out or marking area of X-ray film 7 is thus protected from the X-rays by lead plate 19.

On the side of X-ray film 7 opposite to lead plate 19, the exposure unit 17 comprises an LCD unit 21 whose display surface extends substantially across the entire cut-out area, i.e. it substantially occupies the surface left uncovered by the cut-out of intensifying screen 13 where the foam-rubber pad 9 disposed adjacent to the housing cover has a corresponding recess. The LCD unit 21 comprises associated driver circuits 23 by which a matrix of the display of the LCD unit such as, e. g. a seven-segment matrix, can be activated to present alphanumerical data. The driver circuits 23 are connected via control lines 25 with control contacts 27 which form contact surfaces at the adjacent longitudinal edge of housing cover 3, which are freely accessible so that they can be operated from the outside of cassette 1.

As can be inferred from Fig. 1, the control contacts 27 form a contact field in which the individual control contacts 27 are insulated from each other. Each of the control lines 25 is connected with an associated control contact 27. Two of the control contacts 27 which are not associated with a control line 25 are connected with an electroluminescent plate 33 via associated supply connections 29, 30 (Fig. 2) by which power is supplied from the outside of the cassette. The luminescent plate 33 is disposed between housing cover 3 and LCD unit 21, extends across the entire cut-out area and serves as a light source for illuminating the side of the LCD unit 21 which faces housing cover 3.

Between electroluminescent plate 33 and LCD unit 21, at least one louver screen is inserted which serves as a light-directing arrangement 35 and also extends across the surface of the LCD unit 21 and the electroluminescent plate 33. It is used to suppress stray light as far as possible in order that only such light from the electroluminescent plate 33 can fall through the LCD unit 21 and onto X-ray film 7 whose direction of radiation is substantially perpendicular to the plane of X-ray film 7.

If an LCD unit 21 of the nematic TN-type (twisted nematic) is used the raypath upstream of the LCD unit includes a first polarizing filter serving as a polarizer, and the raypath downstream of the LCD unit 21 includes a second polarizing filter serving as an analyzer, which is not shown in Fig. 2. When the electroluminescent plate 33 has been activated via the control contacts 27 associated with the supply connections 29, 30, its light falls through the light-directing arrangement 35 and is transmitted by the display of the LCD unit 21 in those surface areas which have not been addressed and activated through the control contacts 27 and the control lines 25. No light is transmitted in those areas of the display which have been activated according to data read in. The data are exposed onto X-ray film 7 as "white characters against a black background". LCD unit 21 is controlled simultaneously with the activation of electroluminescent plate 33.

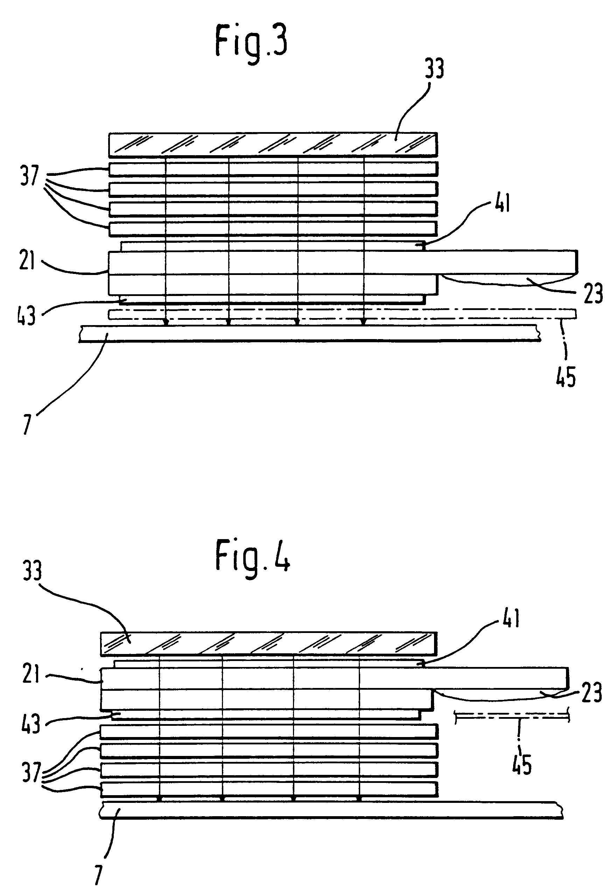

The light-directing arrangement 35 may be designed in various ways. It need not be disposed between the electroluminescent plate 33 and the LCD unit 21 as shown in Fig. 2 but can also be located between the latter and X-ray film 7. Examples of various designs of the light-directing arrangement 35 are illustrated in Figs. 3 to 9.

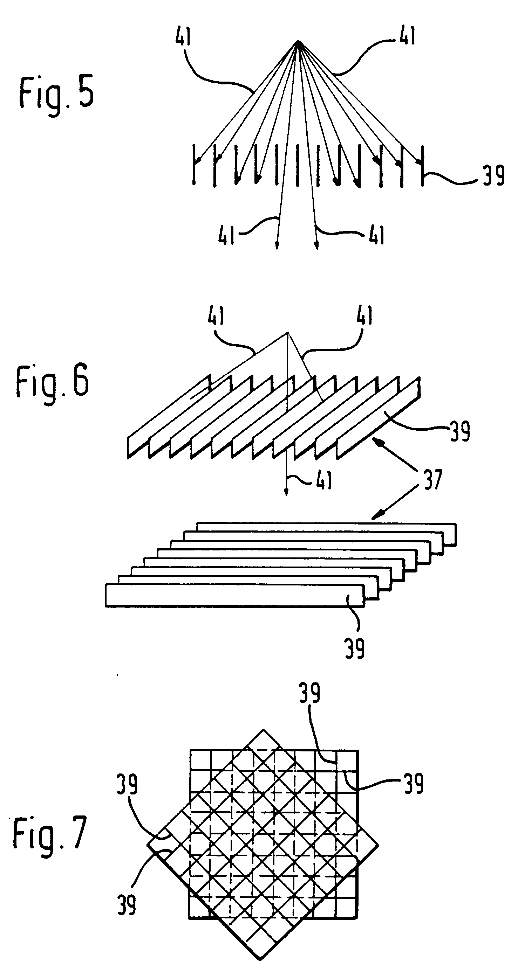

Both in the case of the example shown in Fig. 3 and the example shown in Fig. 2, the light-directing arrangement 35 is disposed between electroluminescent plate 33 and LCD unit 21. The light-directing arrangement consists of four louver screens 37 arranged one after the other in the raypath. The screens are oriented such that their louver elements 39 (Figs. 5 to 9) cross each other. Fig. 6 illustrates how lightrays 41 can pass through louver screen 37 whose elements 39 cross each other at right angles whereas Fig. 5 shows light passing through one single louver screen only. Fig. 7 shows an example in which the light-directing arrangement is composed of four louver screens, the elements 39 of two louver screens each crossing each other at right angles whilst the louver elements 39 of two of the louver screens are displaced by 45° relative to the elements 39 of the other two louver screens.

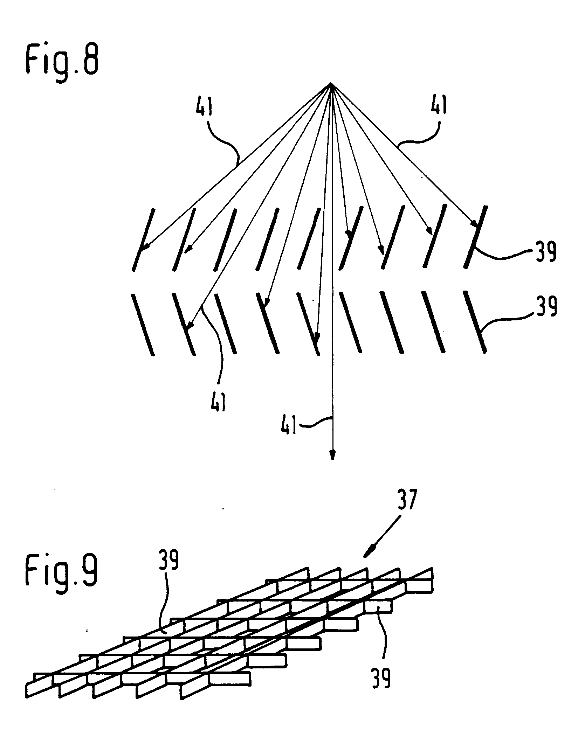

A very favorable light-directing effect is also obtained if the elements 39 of superimposed louver screens are inclined as shown in Fig. 8.

In order to minimize the light-directing arrangement's axial dimension, as measured in the direction of the optical raypath, the elements 39 of one louver screen may intersect each other in the same plane as can be inferred from Fig. 9. If a screen structure of the type shown in Fig. 9 is used the dimensions of the design shown in Fig. 6 are reduced by 50 %.

The arrangement shown in Fig. 4 differs from that illustrated in Fig. 3 only in that the light-directing arrangement composed of four louver screens 37 is placed in the optical raypath behind LCD unit 21, i.e. between said unit and X-ray film 7. Like in Fig. 3 a polarizer 41 is disposed upstream of, and an analyzer 43 downstream of the LCD unit 21. The driver circuits 23 are integrated into the LCD unit 21 in the form of driver ICs using the "chip and glass" technology. As indicated by dash-dotted lines in Figs. 3 and 4, an additional cover in the form of a glass plate 45 may be provided.

If X-ray film cassette 1 is used, the data to be exposed onto X-ray film 7 are read into, and made visible by the LCD unit 21 while the electroluminescent plate 33 is being activated for the exposure of the data.

For this purpose a data-processing unit is used which is generally denoted 51 in Fig. 1. In the case of the example illustrated it includes a keyboard 53 of the type usual for data input as well as a read-in device 55. The latter includes a buffer storage as commonly used in data processing systems, said storage being adapted to store a plurality of data lines, and also an LED display field 57 in which the data stored in the buffer storage are visible. The device 55 moreover features an insertion slot 59 into which cassette 1 can be inserted in the direction of the arrow 61. When the cassette is inserted the control contacts 27 make contact with contact pieces in the device 55, through which the LCD unit 21 is controlled such that the data fed into device 55 and visible in the display field 57 are made visible in the display of the LCD unit 21 by means of a controller included in the device 55 and adapted to the LCD unit 21. The electroluminescent plate 33 is being activated for exposure at the same time. When cassette 1 is subsequently removed from insertion slot 59, the data in the display of the LCD unit 21 are extinguished.

Instead of feeding in data by means of keyboard 53 they may also be retrieved from a data file using for example a PC terminal connected to the host of a hospital. The data may also be read in using a card reader, for example, if patient ID cards with machine-readable information are used.

Rather than inserting cassette 1 into the insertion slot 59 of device 55, said device may also be connected to a contact means provided in the X-ray apparatus used and making contact with the control contacts 27 of cassette 1 when the cassette is located within the X-ray apparatus. The arrangement could be such that the data to be exposed are automatically retrieved, in response to an X-ray exposure, and exposed onto X-ray film 7.

The above description and drawing are confined to features essential to the illustration of an embodiment of the invention. Inasmuch as features are disclosed in the description and not mentioned in the claims they also serve, if necessary, to define the subject matter of the invention.

## Claims

1. X-ray film cassette (1) with a means for marking an X-ray (7) film loaded into the cassette by exposing said film to data of a data carrier (21) using a light source (33) which is provided within the cassette, which can be electrically activated from the outside of the cassette via connections (29,30) leading to the exterior and which is spaced from the X-ray film (7) at a distance which allows the data carrier (21) to be accommodated such that the light falling from the light source (33) onto the X-ray film (7) will be modulated by the data of the data carrier (21) which are to be exposed on said X-ray film (7), **characterized** in that
a) an LCD unit (21) serves as a data carrier,
b) the LCD unit (21) is stationarily mounted in the space forming the raypath between the X-ray film (7) and the light source (33) and, for reading in of the data, can be controlled from the outside of the cassette by control contacts (27) leading to the exterior, and
c) in addition to the LCD unit (21), a light-directing arrangement (35) with at least one louver screen (37) is arranged in the raypath between light source and X-ray film (7).

2. X-ray film cassette according to claim 1, characterized in that the light source is an electroluminescent plate (33) which extends across at least a partial area of the display surface of the LCD unit (21).

3. X-ray film cassette according to claim 1 or 2, characterized in that the light-directing arrangement (35) is disposed between the light source and the LCD unit (21).

4. X-ray film cassette according to claim 1 or 2, characterized in that the light-directing arrangement (35) is disposed between the LCD unit (21) and the X-ray film (7).

5. X-ray film cassette according to one of claims 1 to 4, characterized in that the LCD unit (21) is of the nematic type (TN-cell) and in that one polarizing filter each (41 and 43 respectively) is arranged in the raypath between both the light source and the LCD unit (21) and said LCD unit and the X-ray film (7).

6. X-ray film cassette according to one of claims 1 to 5, characterized in that the light-directing arrangement (35) includes a plurality of louver screens (37) placed one behind the other in the raypath.

7. X-ray film cassette according to claim 6, characterized in that the louver screens (37) are arranged such that the elements (39) of at least two louver screens (37) cross each other.

8. X-ray film cassette according to one of claims 1 to 7, characterized in that the light-directing arrangement (35) has at least one louver screen whose elements (39) cross each other.

9. X-ray film cassette according to claim 7 or 8, characterized in that the elements (39) cross each other at right angles.

10. X-ray film cassette according to one of claims 6 to 9, characterized in that the main plane of the elements (39) of at least one louver screen forms an angle with the axis of the raypath.

## Patentansprüche

1. Röntgenfilmkassette (1) mit einer Einrichtung zum Markieren eines darin befindlichen Röntgenfilms (7) durch Aufbelichten von Daten eines Datenträgers (21) mittels einer im Innern der Kassette vorgesehenen Lichtquelle (33), die vom Kassettenäußeren her über nach außen geführte Anschlüsse (29, 30) elektrisch aktivierbar und in einem Abstand vom Röntgenfilm (7) angeordnet ist, um einen Zwischenraum zwischen diesem und ihr zu bilden, in dem der Datenträger (21) so aufnehmbar ist, daß das von der Lichtquelle (33) zum Röntgenfilm (7) gelangende Licht durch die auf den Röntgenfilm (7) aufzubelichtenden Daten des Datenträgers (21) moduliert wird, **dadurch gekennzeichnet, daß**
a) als Datenträger eine LCD-Anordnung (21) vorgesehen ist,
b) die LCD-Anordnung (21) in dem den Lichtweg zwischen dem Röntgenfilm (7) und der Lichtquelle (33) bildenden Zwischenraum fest angebracht und über nach außen geführte Steuerkontakte (27) vom Kassettenäußeren her zum Einlesen der Daten ansteuerbar ist, und
c) neben der LCD-Anordnung (21) im Lichtweg zwischen der Lichtquelle und dem Röntgenfilm (7) eine Lichtleitanordnung (35) mit mindestens einer Jalousiefolie (37) angeordnet ist.

2. Röntgenfilmkassette nach Anspruch 1, dadurch gekennzeichnet, daß als Lichtquelle eine sich zumindest über einen Teilbereich der Displayfläche der LCD-Anordnung (21) erstreckende Elektrolumineszenzplatte (33) vorgesehen ist.

3. Röntgenfilmkassette nach Anspruch 1 oder 2, dadurch gekennzeichnet, daß die Lichtleitanordnung (35) zwischen der Lichtquelle und der LCD-Anordnung (21) angeordnet ist.

4. Röntgenfilmkassette nach Anspruch 1 oder 2, dadurch gekennzeichnet, daß die Lichtleitanordnung (35) zwischen der LCD-Anordnung (21) und dem Röntgenfilm (7) angeordnet ist.

5. Röntgenfilmkassette nach einem der Ansprüche 1 bis 4, dadurch gekennzeichnet, daß die LCD-Anordnung (21) vom nematischen Typ (TN-Zelle) ist und daß im Lichtweg sowohl zwischen der Lichtquelle und der LCD-Anordnung (21) als auch zwischen dieser und dem Röntgenfilm (7) je ein Polarisationsfilter (41 bzw. 43) angeordnet ist.

6. Röntgenfilmkassette nach einem der Ansprüche 1 bis 5, dadurch gekennzeichnet, daß die Lichtleitanordnung (35) mehrere im Lichtweg hintereinander gelegene Jalousiefolien (37) enthält.

7. Röntgenfilmkassette nach Anspruch 6, dadurch gekennzeichnet, daß die Jalousiefolien (37) so angeordnet sind, daß sich die Lamellen (39) mindestens zweier Jalousiefolien (37) überkreuzen.

8. Röntgenfilmkassette nach einem der Ansprüche 1 bis 7, dadurch gekennzeichnet, daß die Lichtleitanordnung (35) mindestens eine Jalousiefolie mit sich überkreuzenden Lamellen (39) aufweist.

9. Röntgenfilmkassette nach Anspruch 7 oder 8, dadurch gekennzeichnet, daß sich die Lamellen (39) rechtwinklig überkreuzen.

10. Röntgenfilmkassette nach einem der Ansprüche 6 bis 9, dadurch gekennzeichnet, daß die Hauptebene der Lamellen (39) zumindest einer Jalousiefolie mit der Achse des Lichtweges einen Winkel bildet.

## Revendications

1. Cassette à film à rayon X (1) comportant un moyen destiné à marquer un film à rayon X (7) chargé dans la cassette, en exposant ledit film aux données d'un support de données (21) utilisant une source de lumière (33) à l'intérieur de la cassette, laquelle peut être activée électriquement de l'extérieur de la cassette par l'intermédiaire de connexions (29, 30) conduisant à l'extérieur, laquelle est séparée du film à rayon X (7) d'une distance qui permet au support de données (21) d'être placé de telle manière que la lumière tombant de la source de lumière (33) sur le film à rayon X (7) soit modulée par les données du support de données (21) qui doivent être exposées sur ledit film à rayon X (7), caractérisé en ce que
a) une unité d'afficheur à cristaux liquides (21) est utilisée comme support de données,
b) l'unité d'afficheur à cristaux liquides (21) est montée de façon fixe dans l'espace formant le trajet de rayon entre le film à rayon X (7) et la source de lumière (33) et peut être commandée à partir de l'extérieur de la cassette pour la transcription des données par les contacts de commande (27) conduisant à l'extérieur, et
c) en plus de l'unité d'afficheur à cristaux liquides (21), un agencement directif de lumière (35) comportant au moins un écran à grille (37) est disposé dans le trajet de rayon entre la source de lumière et le film à rayon X (7).

2. Cassette à film à rayon X conformément à la revendication 1, caractérisé en ce que la source de lumière est une plaque électroluminescente (33) qui s'étend sur au moins une zone partielle de la surface d'affichage de l'unité d'afficheur à cristaux liquides (21).

3. Cassette à film à rayon X conformément aux revendications 1 ou 2, caractérisé en ce que l'agencement directif de lumière (35) est disposé entre la source de lumière et l'unité d'afficheur à cristaux liquides (21).

4. Cassette à film à rayon X conformément aux revendications 1 ou 2, caractérisé en ce que l'agencement directif de lumière (35) est disposé entre l'unité d'afficheur à cristaux liquides (21) et le film à rayon X (7).

5. Cassette à film à rayon X conformément à l'une des revendications 1 à 4, caractérisé en ce que l'unité d'afficheur à cristaux liquides (21) est du type nématique (cellule nématique en hélice) et en ce que l'un de deux filtres polarisant (41 et 43, respectivement) est disposé dans le trajet de rayon à la fois entre la source de lumière et l'unité d'afficheur à cristaux liquides (21) et ladite unité d'afficheur à cristaux liquides et le film à rayon X (7).

6. Cassette à film à rayon X conformément à l'une des revendications 1 à 5, caractérisé en ce que l'agencement directif de lumière (35) comprend une pluralité d'écrans de grille (37) placés l'un derrière l'autre dans le trajet de rayon.

7. Cassette à film à rayon X conformément à la revendication 6, caractérisé en ce que les écrans à grille (37) sont disposés de telle sorte que les éléments (39) d'au moins deux écrans à grille (37) se croisent l'un l'autre.

8. Cassette à film à rayon X conformément à l'une des revendications 1 à 7, caractérisé en ce que l'agencement directif de lumière (35) comprend au moins un écran à grille dont les éléments (39) se croisent l'un l'autre.

9. Cassette à film à rayon X conformément à la revendication 7 ou 8, caractérisé en ce que les éléments (39) se croisent l'un l'autre à angles droits.

10. Cassette à film à rayon X conformément à l'une des revendications 6 à 9, caractérisé en ce que le plan principal des éléments (39) d'au moins un écran à grille forme un angle avec l'axe du trajet de rayon.
